# EUROPÄISCHE PATENTSCHRIFT

(11) **EP 2 432 692 B1**
(45) Veröffentlichungstag und Bekanntmachung des Hinweises auf die Patenterteilung: **24.08.2016**
(21) Anmeldenummer: 10721781.2
(22) Anmeldetag: 19.05.2010
(51) Int. Cl.: B64D 11/00, B64D 11/04, B64D 11/02

(54) **MONUMENT MIT AUTONOMEM WASSERMODUL**
MONUMENT COMPRISING AN AUTONOMOUS WATER MODULE
MONUMENT À MODULE D'EAU AUTONOME

(30) Priorität: 19.05.2009 DE 102009021970; 19.05.2009 US 179470 P
(43) Veröffentlichungstag der Anmeldung: 28.03.2012
(73) Patentinhaber: Airbus Operations GmbH, 21129 Hamburg (DE)
(72) Erfinder: LINDAUER, Christiane, 22589 Hamburg (DE); SCHREINER, Axel, 28213 Bremen (DE)
(74) Vertreter: Kopf Westenberger Wachenhausen Patentanwälte PartG mbB
(86) Internationale Anmeldenummer: PCT/EP2010/056920
(87) Internationale Veröffentlichungsnummer: WO 2010/133646

(56) Entgegenhaltungen:
- DE-A1-102006 042 300
- DE-A1-102007 029 677
- DE-A1-102007 054 291
- US-A- 5 083 727
- US-A1- 2005 230 539

## Beschreibung

### Verwandte Anmeldungen

Die vorliegende Aruneldung beansprucht die Priorität der deutschen Patentanmeldung 10 2009 021 970.6, eingereicht am 19. Mai 2009 und der US-Provisional Application 61/179,470, eingereicht am 19. Mai 2009.

### Gebiet der Erfindung

Die vorliegende Erfindung betrifft "Water/Waste"-Systeme von Flugzeugen, insbesondere Passagierflugzeugen. Insbesondere betrifft die vorliegende Erfindung ein Monument für Flugzeuge, mit einer Einrichtung zur Aufnahme eines austauschbaren Wassermoduls, und mit einem in der Einrichtung angeordneten austauschbaren Wassermodul für ein Flugzeug mit einem Behälter mit den Standardabmessungen eines Trolleys, wobei der Behälter einen Frischwassertank aufweist, eine Einrichtung zur Abgabe von Frischwasser, und eine Einrichtung zur Abführung von Grauwasser mit einem Grauwassertank. Weiterhin betrifft die Erfindung ein Flugzeug mit einem derartigen austauschbaren Wassermodul.

### Hintergrund der Erfindung

Flugzeuge für die zivile Luftfahrt weisen ein "Water/Waste"-System auf, bei welchem ein Trinkwassersystem, ein Abwassersystem, und ein Toilettensystem vorgesehen sind. Weiterhin kann ein sogenanntes Grauwassersystem vorgesehen sein, in welchem zentral Brauchwasser sämtlicher Wasch- und Spülbecken, nämlich Handwaschbecken in Bordtoiletten und Spülbecken in Bordküchen gesammelt wird. Das Grauwasser enthält insgesamt Frischwasser mit Beimengungen wie Seife und/oder Reste von Kaffee, Tee, Säften oder anderen Getränken. Das Grauwasser kann aus dem Grauwassersystem über einen Drain-Mast (Ablaufstutzen für Flugzeugabwässer) nach außenbords des Flugzeuges abgelassen werden.

Bei einem üblichen "Water/Waste"-System eines Flugzeuges erfolgt die Versorgung aller Wasserverbraucher wie zum Beispiel Waschbecken, Toiletten, Bordküchen, Wasserspender, aus einem zentralen Frischwassersystem, und zwar druckbeaufschlagt oder über Pumpensysteme. Verbrauchtes Wasser wird in das Grauwassersystem oder das Toiletten- oder Waste/Water-System abgeführt. Die Einrichtungen für die Wasserversorgung und die Wasserabführung sind überwiegend jeweils in Baueinheiten, sogenannte Monumente, wie Toilettenmonumente oder Bordküchenmonumente integriert. Monumente sind derartige Baueinheiten, die so sperrig sind, dass sie nicht mehr nachträglich durch die Türöffnungen des Rumpfes des Flugzeuges passen.

Aus der US 5 769 124 ist ein Frischwasserversorgungssystem für Flugzeuge bekannt, das einen belüftbaren Wassertank aufweist, Wasserversorgungsleitungen für Verbraucher wie Waschbecken für Bordküchen und Handwaschbecken, Füll- und Ablaufleitungen, und ein Mehrfunktionsventil, das mehrere herkömmliche Ventile ersetzt und so das System vereinfacht.

Aus der US 5 303 739 ist ein Frischwasserversorgungssystem für Flugzeuge bekannt, das eine Hauptwasserversorgungsleitung aufweist, die über ein steuerbares Ventil mit einem Zusatztank verbunden ist, der in der Nähe einer Wasserentnahmestelle vorgesehen ist. Zunächst wird der Zusatztank über die Hauptwasserversorgungsleitung mit Wasser gefüllt, und dann von dieser durch das Ventil getrennt, welches gleichzeitig die Hauptwasserversorgungsleitung entlüftet. So lange genügend Wasser im Zusatztank vorhanden ist, ist daher kein Wasser in der Hauptwasserversorgungsleitung vorhanden, das bei zu niedrigen Temperaturen einfrieren könnte.

Aus der DE 10 2005 022 855 ist eine Grauwasserentsorgung für Flugzeuge mit einer speziellen Drain-Mast-Verbindung bekannt, die ein schnelles und einfaches Wechseln eines schadhaften Drain-Masts ermöglicht.

Aus der DE 10 2006 042 300 A1 ist eine Sanitärvorrichtung bekannt, die ein Sanitärmodul aufweist, das austauschbar im Kabinenbereich eines Fahrzeugs angeordnet ist, sowie ein im Sanitärmodul eingerichtetes Versorgungssystem aufweist, so dass das Sanitärmodul autark betreibbar ist. Austauschbar können im Sanitärmodul Wasserbehälter vorgesehen sein, etwa ein Frischwasserbehälter, ein Abwasserbehälter, ein Klarwasserbehälter, oder ein Grauwasserbehälter.

Bei dem in der US 5,083,727 A beschriebenen Kabinensystem können Bordküchen und Toilettenräume selektiv ein einem Luftfahrzeug angeordnet werden. Grauwasser einer Bordküche kann in einem Tank aufbewahrt werden, der in einen Lebensmittel-Aufbewahrungskarren eingebaut ist, der normalerweise an der Bordküche befestigt ist.

Wie in der EP 1 542 565 B1 beschrieben, werden für die Versorgung von Passagieren mit Speisen und Getränken in der zivilen Luftfahrt Trolleys eingesetzt, nämlich Behälter mit standardisierten Abmessungen zur Aufnahme von Speisen und/oder Getränken. Als Standard hat sich im Wesentlichen ATLAS durchgesetzt, und in geringerem Ausmaß werden auch Trolleys nach dem KSSU-Standard eingesetzt. Vor Beginn eines Fluges werden mit Speisen und/oder Getränken beschickte Trolleys in geeignete Aufnahmen in der Bordküche hineingerollt und dort fixiert, und dann während des Fluges je nach Bedarf von dort entnommen und zu den Passagieren gerollt.

Bei wie voranstehend geschildert ausgebildeten Standardwassersystemen von Flugzeugen muss im Flugbetrieb während der Bodenzeiten des Flugzeuges eine zentrale Wartung erfolgen. Das verbrauchte Wasser mit allen Beimengungen wird abgelassen, und Frischwasser wird aufgefüllt. Die erforderliche Reinigung der Bordküchen und Toiletten, die jeweils in ein entsprechendes Monument eingebaut sind, ist zeitaufwändig.

In vorgeschriebenen Abständen ist eine Standarddesinfektion des gesamten Wassersystems erforderlich, die während der Wartungszyklen des Flugzeugs erfolgen muss, und einen erheblichen Zeitaufwand benötigt. Auch wenn beispielsweise infolge einer Verkeimung nur ein einzelnes Monument desinfiziert werden müsste, muss das gesamte Flugzeugwassersystem desinfiziert werden. Wenn bei bestehenden Monumenten wie Toilettenmonumenten und Bordküchenmonumenten eine Anpassung an Kundenwünsche erfolgen soll, muss das betreffende Monument komplett ausgebaut werden, was für die Fluggesellschaft einen erheblichen Zeit- und Kostenaufwand mit sich bringt.

Bei Defekt eines Bestandteils der Wasserversorgung innerhalb einer Toilette oder Bordküche des Flugzeugs muss die Reparatur während der Bodenzeiten des Flugzeugs erfolgen.

### Zusammenfassung der Erfindung

Der vorliegenden Erfindung liegt die Aufgabe zugrunde, die Handhabbarkeit und den Betrieb, insbesondere die Wartung von Bordküchenmonumenten und Bordtoilettenmonumenten von Flugzeugen (Luftfahrzeugen) zu erleichtern.

Diese Aufgabe wird durch das erfindungsgemäße Monument für Flugzeuge mit einer Einrichtung zur Aufnahme eines speziellen austauschbaren Wassermoduls nach Anspruch 1, sowie durch ein Flugzeug nach Anspruch 13 gelöst, das mit einem derartigen Monument versehen ist.

Das erfindungsgemäße austauschbare Wassermodul für ein Flugzeug weist im Wesentlichen einen Behälter mit den Standardabmessungen eines Trolleys nach ATLAS- oder KSSU-Standard auf, wobei der Behälter einen Frischwassertank aufweist, eine Einrichtung zur Abgabe von Frischwasser, und eine Einrichtung zur Abführung von Grauwasser. Durch den eigenen Frischwassertank des Wassermoduls kann das Gewicht für die zentrale Wasserversorgung (Frischwasserversorgung) eingespart werden. Um die Autonomie des erfindungsgemäßen Wassermoduls weiter zu vergrößern, weist die Einrichtung zur Abführung von Grauwasser einen Grauwassertank auf. Hierdurch kann auch das Gewicht für die Bestandteile der bisher vorgesehenen, zentralen Einrichtung für die Grauwasserentsorgung eingespart werden. Ein derartiges Wassermodul ist daher autonom sowohl in Bezug auf die Frischwasserentsorgung als auch in Bezug auf die Grauwasserentsorgung.

Durch externe Wartung eines derartigen austauschbaren Wassermoduls werden Bodenzeiten während des Turn-Arounds, der Standardwartungsintervalle sowie zur Behebung technischer Probleme bei der Wasserversorgung verkürzt bzw. vermieden. Ein Service des Wassermoduls kann beispielsweise so erfolgen, dass es beim Catering ausgetauscht wird und ähnlich wie die für Speisen und Getränke vorgesehenen Trolleys gereinigt und für den Wiedereinsatz vorbereitet wird.

Bei Verunreinigung einzelner Wasserarmaturen ist nicht das komplette Flugzeugwassersystem mit allen angeschlossenen Verbrauchern betroffen; einzelne Wassermodule können gezielt gereinigt und desinfiziert werden.

Das Flugzeugtoilettensystem kann durch den modularen Aufbau individuell und schnell konfiguriert werden. Ein Austausch der Armaturen kann an dem Trolley außerhalb des Fluggeräts erfolgen. Eine Anpassung an Kundenwünsche bzw. den Stand der Technik ist problemlos möglich.

Gemäß einer besonders vorteilhaften Ausgestaltung der Erfindung ist das erfindungsgemäße Wassermodul als ein mit Rollen an der Unterseite des Behälters versehener Wassertrolley ausgebildet. Damit weist ein derartiges Wassermodul gemäß der Erfindung alle Vorteile eines Trolleys auf, der bislang nur für Versorgung von Passagieren mit Speisen und Getränken eingesetzt wurde. Die Rollen eines derartigen Wassertrolleys ermöglichen einen problemlosen Transport, ebenso wie bei den bislang bekannten Trolleys, des Wassertrolleys zum Einsatzort bzw. weg von diesem zum Zwecke der Wartung oder Reparatur.

Um die Vielseitigkeit des erfindungsgemäßen Wassermoduls weiter zu erhöhen, weist dieses vorzugsweise einen Abfallbehälter auf, zur Aufnahme von Abfällen, wie Küchenabfällen, Reinigungstüchern und dergleichen.

Vorzugsweise ist bei dem erfindungsgemäßen Wassermodul jeweils ein Füllstandsmessgerät für den Frischwassertank und/oder den Grauwassertank und/oder den Abfallbehälter vorgesehen. Durch ein derartiges Füllstandsmessgerät lässt sich einfach feststellen, ob der minimale Wasserstand im Frischwassertank erreicht ist, oder der maximale Wasserstand im Grauwassertank bzw. maximale Füllstand im Abfallbehälter erreicht ist, damit dann das Wassermodul ausgetauscht und wieder betriebsfähig gemacht oder durch ein betriebsfähiges Wassermodul ausgetauscht werden kann. Vorzugsweise erfolgt eine Meldung der von einem Füllstandmessgerät erfassten Größe an eine zentrale Stelle im Flugzeug. Es kann jedoch auch am Wassermodul eine Einrichtung zur Anzeige des Füllstandes bzw. der Füllstände vorgesehen sein.

Vorzugsweise weist das erfindungsgemäße Wassermodul zumindest einen Sicherungsmechanismus zur lösbaren Verbindung mit einem Bauelement, beispielsweise einem Monument, des Flugzeugs auf. Ein derartiger Sicherungsmechanismus ist beispielsweise als mechanischer Schnellverschluss ausgebildet. Wenn zusätzlich eine Einrichtung zur Kopplung des Sicherungsmechanismus mit dem Bordsystem des Flugzeugs vorgesehen ist, kann über das Bordsystem des Flugzeuges festgestellt werden, ob der Sicherungsmechanismus des Wassermoduls ordnungsgemäß verriegelt ist. Weiterhin kann in einem solchen Fall zur Verhinderung einer unbefugten Freigabe des Sicherungsmechanismus so vorgegangen werden, dass der Sicherungsmechanismus nur über das Bordsystem des Flugzeuges freigegeben, also entriegelt werden kann.

Die genannten Anbindungen des Wassermoduls an das Bordsystem des Flugzeuges erfolgen vorzugsweise über einen Controller des Wassermoduls.

Bei einer Ausbildung des Wassermoduls als Wassertrolley, mit an der Unterseite des Behälters vorgesehenen Rollen, ist vorzugsweise eine Einrichtung zum Fixieren der Rollen vorgesehen; dies dient zur sicheren Fixierung des Wassertrolleys bei einem Zwischenhalt, und insbesondere an dessen endgültigem Einsatzort. Um den optischen Eindruck des Wassertrolleys an jenen vorhandener Einrichtungen anzugleichen, Schmutzecken zu vermeiden und Vandalismus vorzubeugen, kann eine Blende zur Abdeckung der Rollen am Einsatzort des Wassertrolleys vorgesehen sein.

Wenn - wie bei einem Handwaschbecken oder Spülbecken - eine Versorgung mit Warmwasser gewünscht wird, ist vorzugsweise bei dem erfindungsgemäßen Wassermodul ein Wasserheizer zur Erhitzung des Frischwassers vorgesehen. Dies macht eine zentrale Warmwasserversorgung im Flugzeug entbehrlich, wodurch auch Energieverluste in Folge einer Abkühlung langer Warmwasserleitungen bzw. das Vorsehen aufwändiger Isolierungen ausgeschaltet werden. Zur Einstellung der Temperatur des Brauchwassers ist vorzugsweise bei dem Wassermodul eine Mischeinheit zum Mischen erhitzten Frischwassers mit nicht erhitztem Frischwasser vorgesehen.

Ein Monument für Flugzeuge gemäß der Erfindung mit einer Einrichtung zur Aufnahme eines wie voranstehend geschildert ausgebildeten, austauschbaren Wassermoduls ermöglicht, dass bei einer erforderlichen Anpassung des Monumentes, genauer gesagt, von dessen Wasserversorgung, das Monument im Flugzeug verbleiben kann und nicht ausgebaut werden muss, was für Fluggesellschaften zu erheblichen Einsparungen an Zeit und Kosten führt.

Die voranstehend genannten Vorteile wirken sich entsprechend auf ein Flugzeug mit einem wie geschildert ausgebildeten Monument aus.

### Kurze Beschreibung der Zeichnungen

Nachstehend wird eine beispielhafte Ausführungsform der Erfindung unter Bezugnahme auf die beigefügten Zeichnungen näher erläutert. Es zeigt:
- Fig. 1: eine Seitenansicht, teilweise im Schnitt, eines Bordtoilettenmonuments mit einem Wassertrolley gemäß der vorliegenden Erfindung; und
- Fig. 2: eine Seitenansicht, teilweise geschnitten, eines Wassertrolleys gemäß der Erfindung.

### Detaillierte Beschreibung beispielhafter Ausführungsformen

Das erfindungsgemäße Wassermodul wird nachstehend anhand einer bevorzugten Ausführungsform, nämlich eines Wassertrolleys, besprochen. Allerdings muss das erfindungsgemäße Wassermodul nicht unbedingt Rollen an der Unterseite aufweisen, wie dies bei einem Wassertrolley der Fall ist. Das erfindungsgemäße Wassermodul kann beispielsweise auch mit Hilfe einer separaten Transportvorrichtung transportiert werden.

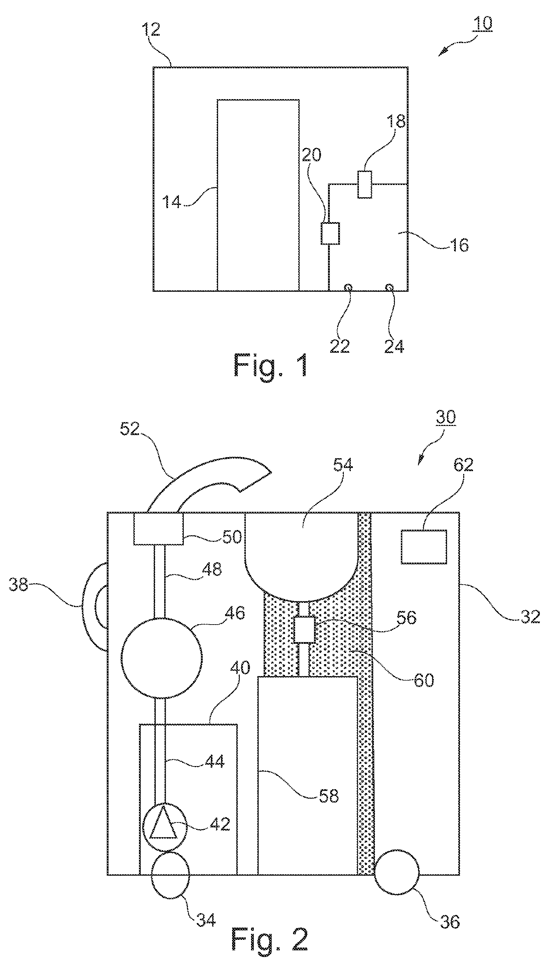

Fig. 1 zeigt in Seitenansicht ein Toilettenmonument 10 eines Flugzeugs mit einer Vorderwand 12, in welcher eine Tür 14 vorgesehen ist. In dem Toilettenmonument 10 ist ein Wassertrolley 16 gemäß der Erfindung angeordnet, der über Rollen 22, 24 an seiner Unterseite in das Toilettenmonument 10 hinein- und aus diesem herausbewegt werden kann. Sicherungsmechanismen 18, 20 sind zur Fixierung des Wassertrolleys 16 im Toilettenmonument 10 vorgesehen.

Anhand des in Fig. 2 dargestellten Wassertrolleys 30 gemäß der Erfindung wird der in Fig. 1 dargestellte Wassertrolley näher erläutert. Der Wassertrolley 30 weist einen Behälter 32 mit darin oder daran angeordneten Funktionselementen des Wassertrolleys auf. An der Unterseite des Behälters 32 sind für den Transport vier Rollen vorgesehen, von denen in Fig. 2 nur zwei Rollen 34, 36 erkennbar sind. Zur Erleichterung des Transports des Wassertrolleys 30 ist der Behälter 32 mit einem Griff (Handgriff) 38 versehen.

Im Innern des Behälters 32 ist ein Frischwassertank 40 vorgesehen, aus welchem mit Hilfe einer Pumpe 42 über ein Steigrohr 44 Frischwasser entnommen werden kann. Es kann optional ein Wasserheizer 46 zur Erhitzung des Frischwassers vorgesehen sein. Das Frischwasser gelangt dann über ein weiteres Steigrohr 48 zu einem Wasserhahn 52 und wird von diesem in eine Waschtischschüssel 54 abgegeben. Wenn der Wasserheizer 46 vorgesehen ist, ist auch eine Mischeinheit 50 vorhanden, mit welcher die gewünschte Temperatur des aus dem Wasserhahn 52 austretenden Wassers eingestellt oder geregelt werden kann.

Wasser (oder Grauwasser) aus der Waschtischschüssel 54 gelangt über einen Geruchsverschluss 56 in einen Grauwassertank 58.

Weiterhin ist in dem Behälter 32 optional ein Abfallbehälter 60 zur Aufnahme von Tüchern und dergleichen vorgesehen. Zur Steuerung der Funktionen des Wassertrolleys 30 und/oder zur Kommunikation mit der Flugzeugelektronik dient ein Controller (Steuerung) 62.

Optional ist für den Frischwassertank 40 und/oder den Grauwassertank 58 und/oder den Abfallbehälter 60 jeweils ein Füllstandsmessgerät vorgesehen. Hierdurch wird beispielsweise der minimal zulässige Füllstand an Frischwasser bzw. der maximal zulässige Füllstand an Grauwasser bzw. der maximal zulässige Füllstand an Abfall erfasst und vorzugsweise an den Controller 62 und von dort an ein geeignetes Anzeigegerät übertragen (nicht dargestellt). Besonders bevorzugt ist der Controller 62 an die Flugzeugelektronik angeschlossen, beispielsweise über das CIDS (Cabin Intercommunication Data System) an das FAP (Forward Attendant Panel), um die betreffenden Füllstände am FAP anzuzeigen.

Über den Controller 62 können auch die in Fig. 10 dargestellten Sicherungsmechanismen 18, 20 überwacht bzw. gesteuert werden. So kann beispielsweise die ordnungsgemäße Verriegelung der Sicherungsmechanismen 18, 20 und damit des Wassertrolleys 16 im Toilettenmonument 10 über den Controller 62 an das FAP gemeldet werden. Weiterhin kann als Sicherheitsmaßnahme vorgesehen sein, dass eine Entriegelung oder Freigabe der Sicherungsmechanismen 18, 20 nur durch Freischalten vom FAP aus erfolgen kann, um ein unbefugtes Entfernen des Wassertrolleys 16 (30) zu verhindern.

Die Rollen 22, 24 des Wassertrolleys 16 und die Rollen 34, 36 des Wassertrolleys 30 weisen vorzugsweise eine Feststelleinrichtung auf, die betätigt wird, sobald der Wassertrolley 16 (30) an seinen Einsatzort gebracht wurde, um die Rollen 22, 24 (34, 36) zu sperren.

Optional kann auch eine Fernsteuereinrichtung für den Wassertrolley 16 bzw. 30 vorgesehen sein, zur automatischen Auffindung seines Stellplatzes, und/oder zum ferngesteuerten Lösen des Wassertrolleys aus dem zugehörigen Monument, und/oder zum Erreichen eines Servicepunktes für den Wassertrolley, vorzugsweise unter der Vorgabe, dass der minimale Füllstand an Frischwasser bzw. der maximale Füllstand an Grauwasser bzw. der maximale Füllstand an Abfall erreicht ist.

Vorzugsweise kann von dem Wassertrolley 16 (30) eine Fehlermeldung abgegeben werden, etwa über den Controller 62, wenn bei einem der Funktionselemente des Wassertrolleys eine Störung auftritt.

Der Wassertrolley gemäß der Erfindung kann Anschlusselemente zur Verbindung mit dem Stromversorgungsnetz des Flugzeuges aufweisen. Hierdurch wird die Stromversorgung jener Funktionselemente des Wassertrolleys sichergestellt, die zum Betrieb mit elektrischer Energie versorgt werden müssen. Dies betrifft beispielsweise Füllstandsmessgeräte, die Pumpe 42, den Wasserheizer 46, den Mischer 50, oder den Controller 62.

Optional kann jedoch auch jeder Wassertrolley eine eigene Stromversorgung mit einer eigenen Batterie aufweisen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Bezugszeichenliste**

| | | | |
|---|---|---|---|
| 10 | Toilettenmonument | 62 | Controller |
| 12 | Vorderwand | 60 | Abfallbehälter |
| 14 | Tür | 58 | Grauwassertank |
| 16 | Wassertrolley | 56 | Geruchsverschluss |
| 18 | Sicherungsmechanismus | 54 | Waschtischschüssel |
| 20 | Sicherungsmechanismus | | |
| 22 | Rolle | | |
| 24 | Rolle | | |
| 30 | Wassertrolley | | |
| 32 | Behälter | | |
| 34 | Rolle | | |
| 36 | Rolle | | |
| 38 | Griff | | |
| 40 | Frischwassertank | | |
| 42 | Pumpe | | |
| 44 | Steigrohr | | |
| 46 | Wasserheizer | | |
| 48 | Steigrohr | | |
| 50 | Mischeinheit | | |
| 52 | Wasserhahn | | |

## Patentansprüche

1. Monument (10) für Flugzeuge, mit einer Einrichtung zur Aufnahme eines austauschbaren Wassermoduls, und mit einem in der Einrichtung angeordneten austauschbaren Wassermodul (16, 30) für ein Flugzeug mit einem Behälter (32) mit den Standard-Abmessungen eines Trolleys (30) nach ATLAS- oder KSSU-Standard, wobei der Behälter (32) aufweist: einen Frischwassertank (4), eine Einrichtung (42, 44, 48, 52) zur Abgabe von Frischwasser, und eine Einrichtung (56, 58) zur Abführung von Grauwasser, die einen Grauwassertank (58) aufweist.

2. Monument nach Anspruch 1, bei welchem das Wassermodul als ein mit Rollen (22, 24, 34, 36) an der Unterseite des Behälters (32) versehener Wassertrolley (16, 30) ausgebildet ist.

3. Monument nach Anspruch 1 oder 2, bei welchem das Wassermodul einen Abfallbehälter (60) aufweist.

4. Monument nach einem der Ansprüche 1 bis 3, bei welchem das Wassermodul ein Füllstandmessgerät für den Frischwassertank (40) und/oder für den Grauwassertank (58) und/oder für den Abfallbehälter (60) aufweist.

5. Monument nach einem der Ansprüche 1 bis 4, bei welchem das Wassermodul zumindest einen Sicherungsmechanismus (18, 20) zur lösbaren Verbindung mit dem Monument (10) des Flugzeugs aufweist.

6. Monument nach Anspruch 5, bei welchem der Sicherungsmechanismus (18, 20) als mechanischer Schnellverschluss ausgebildet ist.

7. Monument nach Anspruch 5 oder 6, bei welchem das Wassermodul eine Einrichtung zur Kopplung des Sicherungsmechanismus (18, 20) mit dem Bordsystem des Flugzeugs aufweist.

8. Monument nach einem der Ansprüche 1 bis 7, bei welchem das Wassermodul einen Controller (62) aufweist, der an das Bordsystem des Flugzeugs anschließbar ausgebildet ist.

9. Monument nach einem der Ansprüche 2 bis 8, bei welchem das Wassermodul eine Einrichtung zum Fixieren der Rollen (22, 24, 34, 36) aufweist.

10. Monument nach einem der Ansprüche 2 bis 9, bei welchem das Wassermodul eine Blende zur Abdeckung der Rollen am Einsatzort des Wassermoduls aufweist.

11. Monument nach einem der Ansprüche 1 bis 10, bei welchem das Wassermodul einen Wasserheizer (46) zur Erhitzung des Frischwassers aufweist.

12. Monument nach Anspruch 11, bei welchem das Wassermodul eine Mischeinheit (50) zum Mischen erhitzten Frischwassers mit nicht erhitztem Frischwasser aufweist.

13. Flugzeug mit einem Monument nach einem der Ansprüche 1 bis 12.

## Claims

1. A monument (10) for airplanes, comprising a means for receiving a replaceable water module, and comprising a replaceable water module (16, 30) arranged in said means for an airplane with a container (32) having the standard-dimensions of a trolley (30) according to the ATLAS- or the KSSU-standard, wherein the container (32) comprises: a fresh water tank (4), a means (42, 44, 48, 52) for dispensing fresh water, and a means (56, 58) for carrying off grey water having a grey water tank (58).

2. A monument according to claim 1, wherein the water module is designed as a water trolley (16, 30) which is provided with rolls (22, 24, 34, 36) at the bottom surface of the container (32).

3. A monument according to claim 1 or 2, wherein the water module comprises a waste container (60).

4. A monument according to one of claims 1 to 3, wherein the water module comprises a level gauge for the fresh water tank (40) and/or for the grey water tank (58) and/or for the waste container (60).

5. A monument according to one of claims 1 to 4, wherein the water module comprises at least one safety mechanism (18, 20) for a detachable connection with the monument (10) of the airplane.

6. A monument according to claim 5, wherein the safety mechanism (18, 20) is designed as a mechanical quick-acting closure.

7. A monument according to claim 5 or 6, wherein the water module comprises a means for coupling the safety mechanism (18, 20) to the on-board system of the airplane.

8. A monument according to one of claims 1 to 7, wherein the water module comprises a controller (62) designed to be connected to the on-board system of the airplane.

9. A monument according to one of claims 2 to 8, wherein the water module comprises a means for fixing the rolls (22, 24, 34, 35).

10. A monument according to one of claims 2 to 9, wherein the water module comprises a cover for covering the rolls on-site of the water module.

11. A monument according to one of claims 1 to 10, wherein the water module comprises a water heater for heating the fresh water.

12. A monument according to claim 11, wherein the water module comprises a mixer unit (50) for mixing heated fresh water with fresh water which has not been heated.

13. An airplane comprising a monument according to one of claims 1 to 12.

## Revendications

1. Structure (10) pour aéronefs, comportant un moyen destiné à recevoir un module d'eau remplaçable, et comportant un module d'eau (16, 30) remplaçable pour un aéronef, disposé dans le moyen, comportant un contenant (32) présentant les dimensions standard d'un chariot (30) selon la norme ATLAS ou KSSU, le contenant (32) présentant : un réservoir à eau fraîche (40), un moyen (42, 44, 48, 52) destiné à distribuer de l'eau fraîche, et un moyen (56, 58) destiné à évacuer les eaux grises, qui présente un réservoir à eaux grises (58).

2. Structure selon la revendication 1, dans laquelle le module d'eau est réalisé sous la forme d'un chariot à eau (16, 30) muni de roulettes (22, 24, 34, 36) sur le dessous du contenant (32).

3. Structure selon la revendication 1 ou 2, dans laquelle le module d'eau présente un contenant à déchets (60).

4. Structure selon l'une des revendications 1 à 3, dans laquelle le module d'eau présente un mesureur de niveau pour le réservoir à eau fraîche (40) et/ou le réservoir à eaux grises (58) et/ou pour le réservoir à déchets (60).

5. Structure selon l'une des revendications 1 à 4, dans laquelle le module d'eau présente au moins un mécanisme de blocage (18, 20) pour la liaison détachable avec la structure (10) de l'aéronef.

6. Structure selon la revendication 5, dans laquelle le mécanisme de blocage (18, 20) est réalisé sous la forme d'un moyen de fermeture rapide mécanique.

7. Structure selon la revendication 5 ou 6, dans laquelle le module d'eau présente un moyen destiné au couplage du mécanisme de blocage (18, 20) avec le système embarqué de l'aéronef.

8. Structure selon l'une des revendications 1 à 7, dans laquelle le module d'eau présente un contrôleur (62), qui est réalisé de manière raccordable au système embarqué de l'aéronef.

9. Structure selon l'une des revendications 2 à 8, dans laquelle le module d'eau présente un moyen destiné à fixer les roulettes (22, 24, 34, 36).

10. Structure selon l'une des revendications 2 à 9, dans laquelle le module d'eau présente un cache destiné à recouvrir les roulettes sur le lieu d'utilisation du module d'eau.

11. Structure selon l'une des revendications 1 à 10, dans laquelle le module d'eau présente un appareil de production d'eau chaude (46) destiné à chauffer l'eau fraîche.

12. Structure selon la revendication 11, dans lequel le module d'eau présente une unité mélangeuse (50) destinée à mélanger de l'eau fraîche chauffée avec de l'eau fraîche non chauffée.

13. Aéronef comportant une structure selon l'une des revendications 1 à 12.
